# EUROPEAN PATENT APPLICATION

(11) **EP 3 373 685 A1**
(43) Date of publication of application: **12.09.2018**
(21) Application number: 16861465.9
(22) Date of filing: 25.10.2016
(51) Int. Cl.: H04W 72/12

(54) **METHOD AND DEVICE FOR SENDING AND RECEIVING FEEDBACK**

(30) Priority: 02.11.2015 CN 201510736032
(71) Applicant: China Academy of Telecommunications Technology, Hai Dian District Beijing 100191 (CN)
(72) Inventor: QIU, Yu, Beijing 100191 (CN); BAO, Wei, Beijing 100191 (CN); XU, Fangli, Beijing 100191 (CN)
(74) Representative: Körfer, Thomas
(86) International application number: PCT/CN2016/103295
(87) International publication number: WO 2017/076197

(57) **Abstract**

The embodiments of the present application relates to the technical field of wireless communications, in particular to a method and device for sending and receiving feedback, used for resolving the problems existing in the prior art that, at present, it cannot be determined whether the UE successfully receives a PDCCH command after the eNodeB sends same. In the embodiments of the present application, after receiving a PDCCH command from a network side device, a terminal sends, by means of a BSR MAC control unit or a MAC control unit in a MAC PDU, feedback information of the PDCCH command being successfully received to the network side device, thereby informing the network side device of successfully receiving the PDCCH command, such that the eNodeB, after sending the PDCCH command, is able to determine whether the UE successfully receives the PDCCH command, further improving the system performance.

## Description

This application claims the benefit of Chinese Patent Application No. 201510736032.2, filed with the Chinese Patent Office on November 2, 2015 and entitled "A method and device for transmitting and receiving feedback", which is hereby incorporated by reference in its entirety.

### Field

The present application relates to the field of wireless communications, and particularly to a method and device for transmitting and receiving feedback.

### Background

As the communication technology is advanced from 3G to 4G, the Long Term Evolution (LTE)/Long Term Evolution-Advanced (LTE-A) technology has been widely commercially available as currently predominant mobile communication technology in the world.

In order to satisfy constantly growing service demands and service experience, a variety of new technologies have been introduced to the LTE/LTE-A systems for an improved service rate, e.g., Multiple Input Multiple Output (MIMO), Carrier Aggregation (CA), 256 Quadrature Amplitude Modulation (256QAM), etc. A (theoretical) system peak rate has been improved from 100Mbps to 4Gbps since the 3GPP Release 8.

In order for a shorter uplink delay, a Scheduling Request (SR) process is currently omitted, but a radio resource is allocated for a User Equipment (UE) (or a terminal) directly using an uplink scheduling grant, so that the UE transmits rapidly in the uplink. The grant approaches include dynamic scheduling or Semi-Persistent Scheduling (SPS). In the traditional LTE/LTE-A system, the UE receives an uplink scheduling grant from a Physical Downlink Control Channel (PDCCH), and transmits uplink data on a corresponding occasion; and if there are no uplink data in a buffer of the UE, then the UE will transmit padding carrying an empty Buffer Status Report (BSR).

For semi-persistent scheduling, an evolved Node B (eNodeB) can traditionally determine from the uplink data or the padding transmitted by the UE that the UE has received successfully a (Re)Activate/Deactivate SPS order, and if the UE does not transmit in the uplink, then the eNodeB may determine that the PDCCH fails to be received. If the uplink transmission mechanism is omitted, then there may arise such a problem that if no data or padding from the UE is received on a corresponding uplink occasion after the (Re)Activate/Deactivate SPS order is transmitted to the UE, then the eNodeB may not determine whether the UE has received successfully the (Re)Activate/Deactivate SPS order.

In summary, at present, the eNodeB cannot determine whether the UE has received successfully the PDCCH order, after the eNodeB transmits it thereto.

### Summary

Embodiments of the application provide a method and device for transmitting and receiving feedback so as to address the problem in the prior art that the eNodeB cannot determine whether the UE has received successfully the PDCCH order, after the eNodeB transmits it thereto.

An embodiment of the application provides a method for transmitting feedback, the method including: receiving, by a User Equipment (UE), a Physical Downlink Control Channel (PDCCH) order from a network-side device; and transmitting, by the UE, feedback information, that the PDCCH order has been received successfully, to the network-side device via a Media Access Control (MAC) control element or a Buffer Status Report (BSR) MAC control element, in an MAC Protocol Data Unit (PDU).

Optionally transmitting, by the UE, the feedback information, that the PDCCH order has been received successfully, to the network-side device via the MAC control element or the BSR MAC control element, in the MAC PDU includes: transmitting, by the UE, the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Optionally transmitting, by the UE, the feedback information, that the PDCCH order has been received successfully, to the network-side device via the MAC control element in the MAC PDU includes: transmitting, by the UE, the feedback information, that the PDCCH order has been received successfully, to the network-side device via a new MAC control element; wherein the new MAC control element is different from an MAC control element specified in a 3GPP TS 36.321 protocol.

Optionally a length of the new MAC control element is 0 bit or 8 bits.

Optionally after the UE receives the PDCCH order from the network-side device, and before the UE transmits the feedback information, that the PDCCH order has been received successfully, to the network-side device via the MAC control element in the MAC PDU, the method further includes: placing, by the UE, a new first MAC sub-header logical channel identifier value in the MAC PDU; wherein the new first MAC sub-header logical channel identifier value indicates that the MAC control element is a new MAC control element.

Optionally transmitting, by the UE, the feedback information, that the PDCCH order has been received successfully, to the network-side device via the BSR MAC control element in the MAC PDU includes: transmitting, by the UE, the feedback information, that the PDCCH order has been received successfully, to the network-side device via a new BSR MAC control element; wherein the new BSR MAC control element is different from a BSR MAC control element specified in the 3GPP TS 36.321 protocol.

Optionally a structure of the new BSR MAC control element includes a part or all of: a long BSR, a short BSR, and a truncated BSR.

Optionally there is no traditional BSR MAC control element in the MAC PDU of the new BSR MAC control element; wherein the traditional BSR MAC control element is a BSR MAC control element specified in the 3GPP TS 36.321 protocol.

Optionally after the UE receives the PDCCH order from the network-side device, and before the UE transmits the feedback information, that the PDCCH order has been received successfully, to the network-side device via the BSR MAC control element in the MAC PDU, the method further includes: placing, by the UE, a new second MAC sub-header logical channel identifier value in the MAC PDU; wherein the new second MAC sub-header logical channel identifier value indicates that the BSR MAC control element is a new BSR MAC control element.

An embodiment of the application provides a method for receiving feedback, the method including: transmitting, by a network-side device, a PDCCH order to a UE; and after receiving an MAC control element or a BSR MAC control element from the UE, if it is determined that the UE transmits feedback information, that the PDCCH order has been received successfully, via the MAC control element or the BSR MAC control element, in an MAC PDU, then determining, by the network-side device, that the UE has received successfully the PDCCU order.

Optionally determining, by the network-side device, that the UE transmits the feedback information, that the PDCCH order has been received successfully, to the network-side device via the MAC control element in the MAC PDU includes: determining, by the network-side device, that the UE transmits the feedback information, that the PDCCH order has been received successfully, to the network-side device via a new MAC control element; wherein the new MAC control element is different from an MAC control element specified in a 3GPP TS 36.321 protocol.

Optionally determining, by the network-side device, that the UE transmits the feedback information, that the PDCCH order has been received successfully, to the network-side device via the BSR MAC control element in the MAC PDU includes: determining, by the network-side device, that the UE transmits the feedback information, that the PDCCH order has been received successfully, to the network-side device via a new BSR MAC control element; wherein the new BSR MAC control element is different from a BSR MAC control element specified in the 3GPP TS 36.321 protocol.

An embodiment of the application provides a UE for transmitting feedback, the UE including: a first receiving module configured to receive a PDCCH order from a network-side device; and a transmitting module configured to transmit feedback information, that the PDCCH order has been received successfully, to the network-side device via an MAC control element or a BSR MAC control element, in an MAC PDU.

Optionally the transmitting module is configured to: transmit the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Optionally the transmitting module is configured to: transmit the feedback information, that the PDCCH order has been received successfully, to the network-side device via a new MAC control element; wherein the new MAC control element is different from an MAC control element specified in a 3GPP TS 36.321 protocol.

Optionally a length of the new MAC control element is 0 bit or 8 bits.

Optionally the transmitting module is further configured to: place a new first MAC sub-header logical channel identifier value in the MAC PDU; wherein the new first MAC sub-header logical channel identifier value indicates that the MAC control element is a new MAC control element.

Optionally the transmitting module is configured to: transmit the feedback information, that the PDCCH order has been received successfully, to the network-side device via a new BSR MAC control element; wherein the new BSR MAC control element is different from a BSR MAC control element specified in the 3GPP TS 36.321 protocol.

Optionally a structure of the new BSR MAC control element includes a part or all of: a long BSR, a short BSR, and a truncated BSR.

Optionally there is no traditional BSR MAC control element in the MAC PDU of the new BSR MAC control element; wherein the traditional BSR MAC control element is a BSR MAC control element specified in the 3GPP TS 36.321 protocol.

Optionally the transmitting module is further configured to: place a new second MAC sub-header logical channel identifier value in the MAC PDU; wherein the new second MAC sub-header logical channel identifier value indicates that the BSR MAC control element is a new BSR MAC control element.

An embodiment of the application provides another UE for transmitting feedback, the UE including: a processor configured to read and execute programs in a memory to receive a PDCCH order from a network-side device through a transceiver, and to transmit feedback information, that the PDCCH order has been received successfully, to the network-side device via an MAC control element or a BSR MAC control element, in an MAC PDU through the transceiver; and the transceiver configured to be controlled by the processor to receive and transmit data.

Optionally the processor is configured to: transmit the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Optionally the processor is configured to: transmit the feedback information, that the PDCCH order has been received successfully, to the network-side device via a new MAC control element; wherein the new MAC control element is different from an MAC control element specified in a 3GPP TS 36.321 protocol.

Optionally a length of the new MAC control element is 0 bit or 8 bits.

Optionally the processor is further configured to: place a new first MAC sub-header logical channel identifier value in the MAC PDU; wherein the new first MAC sub-header logical channel identifier value indicates that the MAC control element is a new MAC control element.

Optionally the processor is configured to: transmit the feedback information, that the PDCCH order has been received successfully, to the network-side device via a new BSR MAC control element; wherein the new BSR MAC control element is different from a BSR MAC control element specified in the 3GPP TS 36.321 protocol.

Optionally a structure of the new BSR MAC control element includes a part or all of: a long BSR, a short BSR, and a truncated BSR.

Optionally there is no traditional BSR MAC control element in the MAC PDU of the new BSR MAC control element; wherein the traditional BSR MAC control element is a BSR MAC control element specified in the 3GPP TS 36.321 protocol.

Optionally the processor is further configured to: place a new second MAC sub-header logical channel identifier value in the MAC PDU; wherein the new second MAC sub-header logical channel identifier value indicates that the BSR MAC control element is a new BSR MAC control element.

An embodiment of the application provides a network-side device for receiving feedback, the network-side device including: a second transmitting module configured to transmit a PDCCH order to a UE; and a processing module configured, after an MAC control element or a BSR MAC control element from the UE is received, if it is determined that the UE transmits feedback information, that the PDCCH order has been received successfully, via the MAC control element or the BSR MAC control element, in an MAC PDU, to determine that the UE has received successfully the PDCCU order.

Optionally the processing module is configured to: determine that the UE transmits the feedback information, that the PDCCH order has been received successfully, to the network-side device via a new MAC control element; wherein the new MAC control element is different from an MAC control element specified in a 3GPP TS 36.321 protocol.

Optionally the processing module is configured to: determine that the UE transmits the feedback information, that the PDCCH order has been received successfully, to the network-side device via a new BSR MAC control element; wherein the new BSR MAC control element is different from a BSR MAC control element specified in the 3GPP TS 36.321 protocol.

An embodiment of the application provides another network-side device for receiving feedback, the network-side device including: a processor configured to read and execute programs in a memory to: transmit a PDCCH order to a UE through a transceiver; and after an MAC control element or a BSR MAC control element from the UE is received through the transceiver, and upon determining that the UE transmits feedback information, that the PDCCH order has been received successfully, via the MAC control element or the BSR MAC control element, in an MAC PDU, determine that the UE has received successfully the PDCCU order; the transceiver configured to be controlled by the processor to receive and transmit data.

Optionally the processor is configured to: determine that the UE transmits the feedback information, that the PDCCH order has been received successfully, to the network-side device via a new MAC control element; wherein the new MAC control element is different from an MAC control element specified in a 3GPP TS 36.321 protocol.

Optionally the processing module is configured to: determine the MAC control element corresponding to a new first MAC sub-header logical channel identifier value in the MAC PDU as a new MAC control element.

Optionally the processing module is configured to: determine that the UE transmits the feedback information, that the PDCCH order has been received successfully, to the network-side device via a new BSR MAC control element; wherein the new BSR MAC control element is different from a BSR MAC control element specified in the 3GPP TS 36.321 protocol.

Optionally the processing module is configured to: determine the BSR MAC control element corresponding to a new second MAC sub-header logical channel identifier value in the MAC PDU as a new BSR MAC control element.

In the embodiments of the application, the UE transmits the feedback information, that the PDCCH order has been received successfully, to the network-side device via an MAC control element or a BSR MAC control element, in an MAC PDU upon reception of the PDCCH order from the network-side device to thereby notify the network-side device that the PDCCH order has been received successfully, so that the eNodeB can determine whether the UE has received successfully the PDCCH order, after the eNodeB transmits it, thus further improving the performance of the system.

### Brief Description of the Drawings

Fig. 1 is a schematic flow chart of a method for transmitting feedback according to an embodiment of the application;
Fig. 2 is a schematic flow chart of a method for receiving feedback according to an embodiment of the application;
Fig. 3 is a schematic structural diagram of a first UE for transmitting feedback according to an embodiment of the application;
Fig. 4 is a schematic structural diagram of a first network-side device for receiving feedback according to an embodiment of the application;
Fig. 5 is a schematic structural diagram of a second UE for transmitting feedback according to an embodiment of the application; and
Fig. 6 is a schematic structural diagram of a second network-side device for receiving feedback according to an embodiment of the application.

### Detailed Description of the Embodiments

In the embodiments of the application, a UE transmits feedback information, that a PDCCH order from a network-side device has been received successfully, to the network-side device via an MAC control element, or a BSR MAC control element, in an MAC PDU upon reception of the PDCCH order to thereby notify the network-side device that the PDCCH order has been received successfully, so that the eNodeB can determine whether the UE has received successfully the PDCCH order, after the eNodeB transmits it, thus further improving the performance of the system.

For scheduling, a grant is carried in a PDCCH, and for SPS activation/deactivation, an order is carried in a PDCCH. The PDCCH order in the embodiments of the application is also applicable to a PDCCH grant. In an implementation, feedback of the UE for the PDCCH order relates but will not be limited to a part or all of the following instances: an Uplink SPS activation order is received; an Uplink SPS deactivation (or release) order is received; and an uplink dynamic scheduling grant is received.

The embodiments of the application will be described below in further details with reference to the drawings.

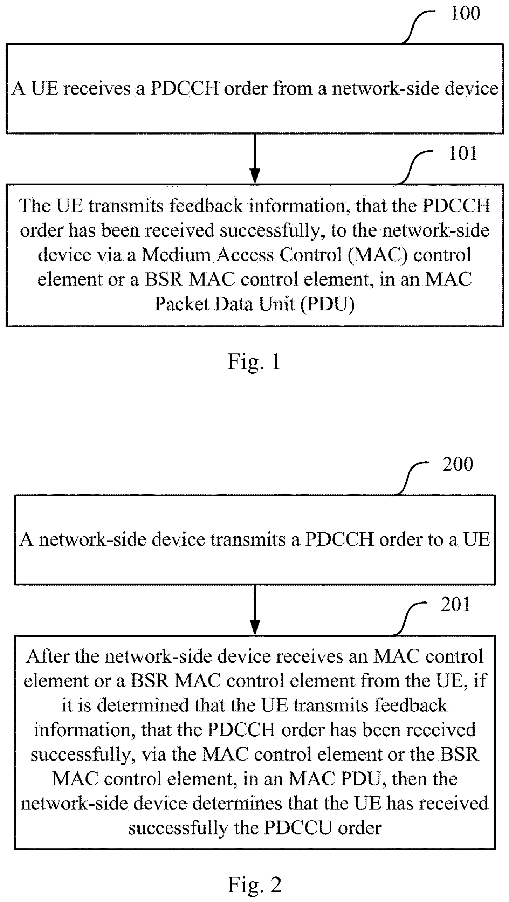

As illustrated in Fig. 1, a method for transmitting feedback according to an embodiment of the application includes the following operations.

In the operation 100, a UE receives a PDCCH order from a network-side device.

In the operation 101, the UE transmits feedback information, that the PDCCH order has been received successfully, to the network-side device via a Medium Access Control (MAC) control element or a BSR MAC control element, in an MAC Packet Data Unit (PDU).

Optionally the UE transmits the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Correspondingly the network-side device can know from the MAC control element or the BSR MAC control element, in the MAC PDU that the PDCCH order has been received successfully at the UE side.

The feedback information may be particularly transmitted via the MAC control element or the BSR MAC control element as needed, as specified in a protocol, as instructed by a higher layer, or as determined otherwise.

The following implementations thereof will be introduced.

In a first implementation, the feedback information is transmitted via the MAC control element in the MAC PDU.

Optionally the UE transmits the feedback information, that the PDCCH order has been received successfully, to the network-side device via a new MAC control element; where the new MAC control element is different from an MAC control element specified in the 3^{rd} Generation Partnership Project (3GPP) Technical Specification (TS) 36.321 protocol.

Optionally a length of the new MAC control element is 0 bit or 8 bits.

Generally there is a 0-bit format; and if some information (e.g., a Power Headroom Report (PHR), etc.) is to be carried, then there may be an 8-bit format. The MAC control element in the 0-bit format is null instead of carrying information, and the network-side device knows from a corresponding logical channel identifier in an MAC sub-header that it is feedback information; and the 8-bit format can carry information, e.g., a PHR, etc.

It shall be noted that the length of the new MAC control element will not be limited to the two lengths above, but other lengths can also be equally applicable to the embodiment of the application.

Optionally an MAC sub-header logical channel identifier of the new MAC control element is further extended in the embodiment of the application.

Particularly after the UE receives the PDCCH order from the network-side device, and before the UE transmits the feedback information, that the PDCCH order has been received successfully, to the network-side device via the BSR MAC control element in the MAC PDU, a new first MAC sub-header logical channel identifier value is placed in the MAC PDU; where the new first MAC sub-header logical channel identifier value indicates that the MAC control element is a new MAC control element.

Since a new MAC Control Element (CE) is introduced, the existing uplink shared channel logic channel identifier (values of a Logical Channel Identifier (LCID) for an Uplink Shared Channel (UL-SCH) in Table 6.2.1-2, 3GPP TS36.321) needs to be extended. As depicted in Table 1, there is a 5-bit field of the existing logical channel identifier (a Logical Channel Identifier (LCID) can range from 00000 to 11111), where there are a large number of reserved values available (01100 to 10101).

**Table 1: Values of a logical channel identifier for an uplink shared channel**

| Index | LCID values |
|---|---|
| 01101-10101 | Reserved |
| 01100 | (ACKnowledge, ACK) MAC CE |

In an implementation, any one of the reserved values, e.g., (01100), can be selected to indicate the newly introduced MAC CE.

Based upon the description above, the UE can make feedback for the PDCCH order by transmitting a data PDU or padding PDU including the new MAC CE and the corresponding MAC sub-header over an Uplink Shared Channel (UL-SCH) upon reception of the uplink order from the PDCCH.

In a second implementation, the feedback information is transmitted via the BSR MAC control element in the MAC PDU.

Optionally the UE transmits the feedback information, that the PDCCH order has been received successfully, to the network-side device via a new BSR MAC control element; where the new BSR MAC control element is different from a BSR MAC control element specified in the 3GPP TS 36.321 protocol.

In an implementation, the structure of the new BSR MAC control element includes a part or all of: a long BSR, a short BSR, and a truncated BSR.

Optionally there is no traditional BSR MAC control element in the MAC PDU of the new BSR MAC control element, where the traditional BSR MAC control element is a BSR MAC control element specified in the 3GPP TS 36.321 protocol.

Optionally an MAC sub-header logical channel identifier of the new MAC control element is further extended in the embodiment of the application.

Optionally before the UE receives the PDCCH order from the network-side device, and before the UE transmits the feedback information, that the PDCCH order has been received successfully, to the network-side device via the BSR MAC control element in the MAC PDU, a new second MAC sub-header logical channel identifier value is placed in the MAC PDU; where the new second MAC sub-header logical channel identifier value indicates that the BSR MAC control element is a new BSR MAC control element.

Since a new MAC CE is introduced, the existing uplink shared channel logic channel identifier (values of an LCID for a UL-SCH in Table 6.2.1-2, 3GPP TS36.321) needs to be extended. As depicted in Table 1, there is a 5-bit field of the existing logical channel identifier (an LCID can range from 00000 to 11111), where there are a large number of reserved values available (01100 to 10101).

Here an ACK BSR(s) is newly added as an LCID to be used by the UE to transmit feedback for the PDCCH order, and an MAC CE format corresponding to the BSR may be a short BSR or a long BSR or a truncated BSR, where the traditional BSR MAC CE format is still used as it is. For example, the LCID of the ACK BSR is 01100 in the table above.

Based upon the description above, the UE can make feedback for the PDCCH order (or grant) by transmitting a data PDU or padding PDU over an Uplink Shared Channel (UL-SCH) upon reception of the uplink order from the PDCCH.

Here the data PDU carries the ACK BSR MAC CE.

As illustrated in Fig. 2, a method for receiving feedback according to an embodiment of the application includes the following operations.

In the operation 200, a network-side device transmits a PDCCH order to a UE.

In the operation 201, after the network-side device receives an MAC control element or a BSR MAC control element from the UE, if it is determined that the UE transmits feedback information, that the PDCCH order has been received successfully, via the MAC control element or the BSR MAC control element, in an MAC PDU, then the network-side device determines that the UE has received successfully the PDCCU order.

Optionally the UE transmits the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Correspondingly the network-side device can know from the MAC control element or the BSR MAC control element, in the MAC PDU that the PDCCH order has been received successfully at the UE side.

The feedback information may be particularly transmitted via the MAC control element or the BSR MAC control element as needed, as specified in a protocol, as instructed by a higher layer, or as determined otherwise.

The following implementations thereof will be introduced.

In a first implementation, the feedback information is transmitted via the MAC control element in the MAC PDU.

Optionally the network-side device determines that the UE transmits the feedback information, that the PDCCH order has been received successfully, to the network-side device via the MAC control element in the MAC PDU, as follows: the network-side device determines that the UE transmits the feedback information, that the PDCCH order has been received successfully, to the network-side device via a new MAC control element; where the new MAC control element is different from an MAC control element specified in the 3GPP TS 36.321 protocol.

Optionally the length of the new MAC control element is 0 bit or 8 bits.

Generally there is a 0-bit format; and if some information (e.g., a Power Headroom Report (PHR), etc.) is to be carried, then there may be an 8-bit format. The MAC control element in the 0-bit format is null instead of carrying information, and the network-side device knows from a corresponding logical channel identifier in an MAC sub-header that it is feedback information; and the 8-bit format can carry information, e.g., a PHR, etc.

It shall be noted that the length of the new MAC control element will not be limited to the two lengths above, but other lengths can also be equally applicable to the embodiment of the application.

Optionally an MAC sub-header logical channel identifier of the new MAC control element is further extended in the embodiment of the application.

Particularly after the UE receives the PDCCH order from the network-side device, and before the UE transmits the feedback information, that the PDCCH order has been received successfully, to the network-side device via the BSR MAC control element in the MAC PDU, a new first MAC sub-header logical channel identifier value is placed in the MAC PDU, where the new first MAC sub-header logical channel identifier value indicates that the MAC control element is a new MAC control element.

Since a new MAC Control Element (CE) is introduced, the existing uplink shared channel logic channel identifier (values of a Logical Channel Identifier (LCID) for an Uplink Shared Channel (UL-SCH) in Table 6.2.1-2, 3GPP TS36.321) needs to be extended. As depicted in Table 1, there is a 5-bit field of the existing logical channel identifier (a Logical Channel Identifier (LCID) can range from 00000 to 11111), where there are a large number of reserved values available (01100 to 10101).

In an implementation, any one of the reserved values, e.g., (01100), can be selected to indicate the newly introduced MAC CE.

In a second implementation, the feedback information is transmitted via the BSR MAC control element in the MAC PDU.

Optionally the network-side device determines that the UE transmits the feedback information, that the PDCCH order has been received successfully, to the network-side device via the BSR MAC control element in the MAC PDU, as follows: the network-side device determines that the UE transmits the feedback information, that the PDCCH order has been received successfully, to the network-side device via a new BSR MAC control element, where the new BSR MAC control element is different from a BSR MAC control element specified in the 3GPP TS 36.321 protocol.

In an implementation, the structure of the new BSR MAC control element includes a part or all of: a long BSR, a short BSR, and a truncated BSR.

Optionally there is no traditional BSR MAC control element in the MAC PDU of the new BSR MAC control element, where the traditional BSR MAC control element is a BSR MAC control element specified in the 3GPP TS 36.321 protocol.

Optionally an MAC sub-header logical channel identifier of the new MAC control element is further extended in the embodiment of the application.

Optionally before the UE receives the PDCCH order from the network-side device, and before the UE transmits the feedback information, that the PDCCH order has been received successfully, to the network-side device via the BSR MAC control element in the MAC PDU, a new second MAC sub-header logical channel identifier value is placed in the MAC PDU, where the new second MAC sub-header logical channel identifier value indicates that the BSR MAC control element is a new BSR MAC control element.

Since a new MAC CE is introduced, the existing uplink shared channel logic channel identifier (values of an LCID for a UL-SCH in Table 6.2.1-2, 3GPP TS36.321) needs to be extended. As depicted in Table 1, there is a 5-bit field of the existing logical channel identifier (an LCID can range from 00000 to 11111), where there are a large number of reserved values available (01100 to 10101).

Here an ACK BSR(s) is newly added as an LCID to be used by the UE to transmit feedback for the PDCCH order, and an MAC CE format corresponding to the BSR may be a short BSR or a long BSR or a truncated BSR, where the traditional BSR MAC CE format is still used as it is. For example, the LCID of the ACK BSR is 01100 in the table above.

Here the network-side device in the embodiment of the application can be a base station (e.g., a macro Node B (including an evolved Node B), a home Node B, etc.,), or can be a Relay Node (RN) device, or can be another network-side device.

The solution of the application will be described below in details in connection with several examples.

In a first example, SPS is activated, and the UE feeds back an ACK MAC CE.

In an operation 1, the eNodeB issues an SPS activation order to the UE via a PDCCH.

In an operation 2, several subsequent instances and their corresponding UE behaviors are as follows.
a) The UE receives successfully the PDCCH order, and there are data in a buffer of the UE: the UE transmits the data on a next SPS occasion while carrying an ACK MAC CE in an MAC PDU, where 01100 is filled in an LCID in an MAC sub-header corresponding to the ACK MAC CE.
   Here the size of the ACK MAC CE is typically 0 bit (if the size of the ACK MAC CE is not 0 bit, then related information of a PHR, a BSR, etc., can be carried in the ACK MAC CE).
b) The UE receives successfully the PDCCH order, and there are no data in a buffer of the UE: the UE transmits padding data on an appropriate uplink occasion, while carrying an ACK MAC CE, where 01100 is filled in an LCID in an MAC sub-header corresponding to the ACK MAC CE.
   Here the appropriate uplink occasion can be a next SPS occasion or a recent uplink data transmission occasion; and the size of the ACK MAC CE is typically 0 bit (if the size of the ACK MAC CE is not 0 bit, then related information of a PHR, a BSR, etc., can be carried in the ACK MAC CE).
c) The UE fails to receive the PDCCH order, and there are data in a buffer of the UE: the UE transmits a Dedicated Scheduling Request (D-SR) for an uplink scheduling grant on a recent PUCCH occasion according to the current behavior of the UE.
d) The UE fails to receive the PDCCH order, and there are no data in a buffer of the UE: there is not any behavior of the UE.

In an operation 3, the eNodeB can determine from the behaviors of the UE in the respective instances above whether the UE has received successfully the PDCCH activation order.

If the eNodeB receives uplink feedback (the ACK MAC CE) from the UE, then the eNodeB will determine that the UE has received successfully the PDCCH order, and subsequently wait for uplink data of the UE.

If the eNodeB does not receive any uplink feedback (an MAC PDU carrying the ACK MAC CE) from the UE, then the eNodeB will determine that the UE fails to receive the PDCCH order, and retransmit the PDCCH activation order on a corresponding downlink occasion, and the operation 2 will be repeated until the PDCCH order is received successfully.

In a second example, SPS is deactivated, and the UE feeds back an ACK MAC CE.

In an operation 1, the eNodeB issues an SPS deactivation order to the UE via a PDCCH.

In an operation 2, several subsequent instances and their corresponding UE behaviors are as follows.
a) The UE receives successfully the PDCCH order, and there are data in a buffer of the UE: the UE postpones SPS resource releasing until a next SPS occasion, and transmits the data on the next SPS occasion, where an ACK MAC CE is carried in an MAC PDU, and 01100 is filled in an LCID of an MAC sub-header corresponding to the ACK MAC CE.
   Here the size of the ACK MAC CE is typically 0 bit (if the size of the ACK MAC CE is not 0 bit, then related information of a PHR, a BSR, etc., can be carried in the ACK MAC CE).
b) The UE receives successfully the PDCCH order, and there are no data in a buffer of the UE: the UE postpones SPS resource releasing until a next SPS occasion, and transmits padding data carrying an ACK MAC CE on an appropriate uplink occasion, where 01100 is filled in an LCID in an MAC sub-header corresponding to the MAC CE.
   Here the appropriate uplink occasion can be a next SPS occasion or a recent uplink data transmission occasion; and the size of the ACK MAC CE is typically 0 bit (if the size of the ACK MAC CE is not 0 bit, then related information of a PHR, a BSR, etc., can be carried in the ACK MAC CE).
c) The UE fails to receive the PDCCH order, and there are data in a buffer of the UE: the UE transmits the data over a next SPS resource according to the current behavior of the UE, where there is no ACK MAC CE carried in an MAC PDU.
d) The UE fails to receive the PDCCH order, and there are no data in a buffer of the UE: the UE skips uplink transmission, and does not transmit any data over a next available SPS resource.

In an operation 3, the eNodeB can determine from the behaviors of the UE in the respective instances above whether the UE has received successfully the PDCCH deactivation order.

If the eNodeB receives uplink feedback (the ACK MAC CE) from the UE, then the eNodeB will determine that the UE has received successfully the PDCCH order, and release an SPS resource.

If the eNodeB does not receive any uplink feedback (an MAC PDU carrying the ACK MAC CE) from the UE, then the eNodeB will determine that the UE fails to receive the PDCCH order, and retransmit the PDCCH deactivation order on a corresponding downlink occasion, and the operation 2 will be repeated until the PDCCH order is received successfully.

In a third example, SPS is activated, and the UE makes feedback in an ACK BSR MAC CE.

In an operation 1, the eNodeB issues an SPS activation order to the UE in a PDCCH.

In an operation 2, several subsequent instances and their corresponding UE behaviors are as follows.
a) The UE receives successfully the PDCCH order, and there are data in a buffer of the UE: the UE transmits the data on a next SPS occasion while carrying an ACK BSR MAC CE in an MAC PDU, where a corresponding LCID is written in an MAC sub-header.
   Here the structure of the ACK BSR MAC CE can be one or more of the existing long/short/truncated BSR formats; and in the case that the ACK BSR MAC CE is carried, there is no traditional BSR MAC CE in an MAC PDU.
b) The UE receives successfully the PDCCH order, and there are no data in a buffer of the UE: the UE transmits padding data on an appropriate uplink occasion, while carrying an ACK BSR MAC CE in the padding data.
   Here the appropriate uplink occasion can be a next SPS occasion or a recent uplink data transmission occasion; the structure of the ACK BSR MAC CE can be one or more of the existing long/short/truncated BSR formats; and in the case that the ACK BSR MAC CE is carried, there is no traditional BSR MAC CE in an MAC PDU.
c) The UE fails to receive the PDCCH order, and there are data in a buffer of the UE: the UE transmits a D-SR for an uplink scheduling grant on a recent PUCCH occasion according to the current behavior of the UE.
d) The UE fails to receive the PDCCH order, and there are no data in a buffer of the UE: there is not any behavior of the UE.

In an operation 3, the eNodeB can determine from the behaviors of the UE in the respective instances above whether the UE has received successfully the PDCCH activation order.

If the eNodeB receives uplink feedback (the ACK BSR MAC CE) from the UE, then the eNodeB will determine that the UE has received successfully the PDCCH order, and subsequently wait for uplink data of the UE.

If the eNodeB does not receive any uplink feedback (an MAC PDU carrying the ACK BSR MAC CE) from the UE, then the eNodeB will determine that the UE fails to receive the PDCCH order, and retransmit the PDCCH activation order on a corresponding downlink occasion, and the operation 2 will be repeated until the PDCCH order is received successfully.

In a fourth example, SPS is deactivated, and the UE makes feedback in an ACK BSR MAC CE.

In an operation 1, the eNodeB issues an SPS deactivation order to the UE in a PDCCH.

In an operation 2, several subsequent instances and their corresponding UE behaviors are as follows.
a) The UE receives successfully the PDCCH order, and there are data in a buffer of the UE: the UE postpones SPS resource releasing until a next SPS occasion, and transmits the data on the next SPS occasion, where an ACK BSR MAC CE is carried in an MAC PDU, and a corresponding LCID is written in an MAC sub-header.
   Here the structure of the ACK BSR MAC CE can be one or more of the existing long/short/truncated BSR formats; and in the case that the ACK BSR MAC CE is carried, there is no traditional BSR MAC CE in an MAC PDU.
b) The UE receives successfully the PDCCH order, and there are no data in a buffer of the UE: the UE postpones SPS resource releasing until a next SPS occasion, and transmits padding data carrying an ACK BSR MAC CE on an appropriate uplink occasion.
   Here the appropriate uplink occasion can be a next SPS occasion or a recent uplink data transmission occasion; the structure of the ACK BSR MAC CE can be one or more of the existing long/short/truncated BSR formats; and in the case that the ACK BSR MAC CE is carried, there is no traditional BSR MAC CE in an MAC PDU.
c) The UE fails to receive the PDCCH order, and there are data in a buffer of the UE: the UE transmits the data over a next SPS resource according to the current behavior of the UE.
d) The UE fails to receive the PDCCH SPS resource deactivation order, and there are no data in a buffer of the UE: the UE skipsr uplink transmission, and does not transmit any data over a next available SPS resource.

In an operation 3, the eNodeB can determine from the behaviors of the UE in the respective instances above whether the UE has received successfully the PDCCH deactivation order.

If the eNodeB receives uplink feedback (the ACK BSR MAC CE) from the UE, then the eNodeB will determine that the UE has received successfully the PDCCH order, and release an SPS resource.

If the eNodeB does not receive any uplink feedback (an MAC PDU carrying the ACK BSR MAC CE) from the UE, then the eNodeB will determine that the UE fails to receive the PDCCH order, and retransmit the PDCCH deactivation order on a corresponding downlink occasion, and the operation 2 will be repeated until the PDCCH order is received successfully.

Based upon the same inventive idea, an embodiment of the application further provides a UE, and since the UE addresses the problem under a similar principle to the method for transmitting feedback according to an embodiment of the application as illustrated in Fig. 1, reference can be made to the implementation of the method for an implementation of the UE, and a repeated description thereof will be omitted here.

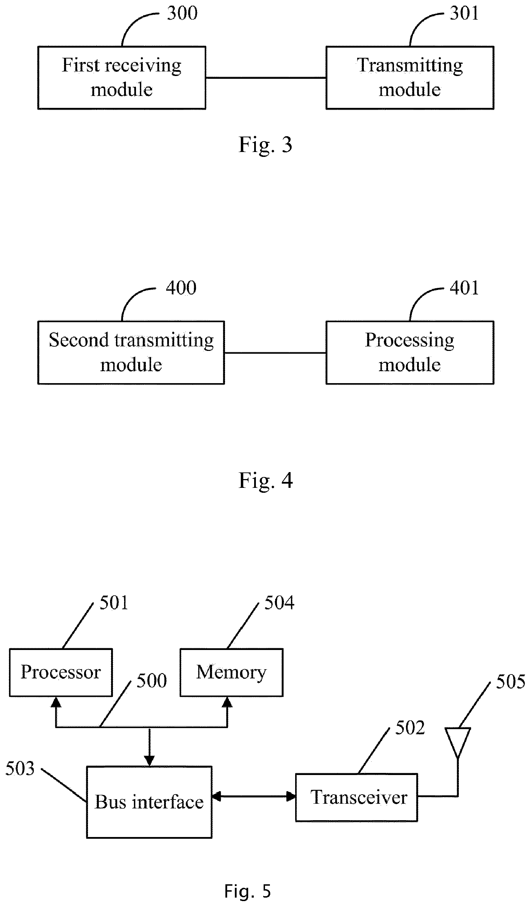

As illustrated in Fig. 3, a first UE for transmitting feedback according to an embodiment of the application includes: a first receiving module 300 configured to receive a PDCCH order from a network-side device; and a transmitting module 302 configured to transmit feedback information, that the PDCCH order has been received successfully, to the network-side device via an MAC control element, or a BSR MAC control element, in an MAC PDU.

Optionally the transmitting module 301 is configured: to transmit the feedback information, that the PDCCH order has been received successfully, to the network-side device via the MAC control element or the BSR MAC control element, in the MAC PDU upon recent uplink transmission or on a recent SPS occasion, upon reception of the PDCCH order from the network-side device.

Optionally the transmitting module 301 is configured: to transmit the feedback information, that the PDCCH order has been received successfully, to the network-side device via a new MAC control element; where the new MAC control element is different from an MAC control element specified in the 3GPP TS 36.321 protocol.

Optionally the length of the new MAC control element is 0 bit or 8 bits.

Optionally the transmitting module 301 is further configured: to place a new first MAC sub-header logical channel identifier value in the MAC PDU; where the new first MAC sub-header logical channel identifier value indicates that the MAC control element is a new MAC control element.

Optionally the transmitting module 301 is configured: to transmit the feedback information, that the PDCCH order has been received successfully, to the network-side device via a new BSR MAC control element; where the new BSR MAC control element is different from a BSR MAC control element specified in the 3GPP TS 36.321 protocol.

Optionally the structure of the new BSR MAC control element includes a part or all of: a long BSR, a short BSR, and a truncated BSR.

Optionally there is no traditional BSR MAC control element in the MAC PDU of the new BSR MAC control element; where the traditional BSR MAC control element is a BSR MAC control element specified in the 3GPP TS 36.321 protocol.

Optionally the transmitting module 301 is further configured: to place a new second MAC sub-header logical channel identifier value in the MAC PDU; where the new second MAC sub-header logical channel identifier value indicates that the BSR MAC control element is a new BSR MAC control element.

Based upon the same inventive idea, an embodiment of the application further provides a network-side device, and since the network-side device addresses the problem under a similar principle to the method for receiving feedback according to an embodiment of the application as illustrated in Fig. 2, reference can be made to the implementation of the method for an implementation of the network-side device, and a repeated description thereof will be omitted here.

As illustrated in Fig. 4, a first network-side device for receiving feedback according to an embodiment of the application includes: a second transmitting module 400 configured to transmit a PDCCH order to a UE; and a processing module 401 configured, after an MAC control element or a BSR MAC control element from the UE is received, if it is determined that the UE transmits feedback information, that the PDCCH order has been received successfully, via the MAC control element, or the BSR MAC control element, in an MAC PDU, to determine that the UE has received successfully the PDCCU order.

Optionally the processing module 401 is configured: to determine that the UE transmits the feedback information, that the PDCCH order has been received successfully, to the network-side device via a new MAC control element; where the new MAC control element is different from an MAC control element specified in the 3GPP TS 36.321 protocol.

Optionally the processing module 401 is configured: to determine the MAC control element corresponding to a new first MAC sub-header logical channel identifier value in the MAC PDU as the new MAC control element.

Optionally the processing module 401 is configured: to determine that the UE transmits the feedback information, that the PDCCH order has been received successfully, to the network-side device via a new BSR MAC control element; where the new BSR MAC control element is different from a BSR MAC control element specified in the 3GPP TS 36.321 protocol.

Optionally the processing module 401 is configured: to determine the BSR MAC control element corresponding to a new second MAC sub-header logical channel identifier value in the MAC PDU as the new BSR MAC control element.

Based upon the same inventive idea, an embodiment of the application further provides a UE, and since the UE addresses the problem under a similar principle to the method for transmitting feedback according to an embodiment of the application as illustrated in Fig. 1, reference can be made to the implementation of the method for an implementation of the UE, and a repeated description thereof will be omitted here.

As illustrated in Fig. 5, a second UE for transmitting feedback according to an embodiment of the application includes: a processor 501 configured to read and execute programs in a memory 504 to receive a PDCCH order from a network-side device through a transceiver 502, and to transmit feedback information, that the PDCCH order has been received successfully, to the network-side device via an MAC control element, or a BSR MAC control element, in an MAC PDU through the transceiver 502; and the transceiver 502 is configured to be controlled by the processor 501 to receive and transmit data.

Optionally the processor 501 is configured: to transmit the feedback information, that the PDCCH order has been received successfully, to the network-side device via the MAC control element, or the BSR MAC control element, in the MAC PDU upon recent uplink transmission or on a recent SPS occasion, upon reception of the PDCCH order from the network-side device.

Optionally the processor 501 is configured: to transmit the feedback information, that the PDCCH order has been received successfully, to the network-side device via a new MAC control element; where the new MAC control element is different from an MAC control element specified in the 3GPP TS 36.321 protocol.

Optionally the length of the new MAC control element is 0 bit or 8 bits.

Optionally the processor 501 is further configured: to place a new first MAC sub-header logical channel identifier value in the MAC PDU; where the new first MAC sub-header logical channel identifier value indicates that the MAC control element is a new MAC control element.

Optionally the processor 501 is configured: to transmit the feedback information, that the PDCCH order has been received successfully, to the network-side device via a new BSR MAC control element; where the new BSR MAC control element is different from a BSR MAC control element specified in the 3GPP TS 36.321 protocol.

Optionally the structure of the new BSR MAC control element includes a part or all of: a long BSR, a short BSR, and a truncated BSR.

Optionally there is no traditional BSR MAC control element in the MAC PDU of the new BSR MAC control element; where the traditional BSR MAC control element is a BSR MAC control element specified in the 3GPP TS 36.321 protocol.

Optionally the processor 501 is further configured: to place a new second MAC sub-header logical channel identifier value in the MAC PDU; where the new second MAC sub-header logical channel identifier value indicates that the BSR MAC control element is a new BSR MAC control element.

In Fig. 5, in a bus architecture (represented by a bus 500), the bus 500 can include any number of interconnecting buses and bridges to particularly link together various circuits including one or more processors represented by the processor 501, and one or more memories represented by the memory 504. The bus 500 can further link together various other circuits, e.g., peripheral devices, manostats, power management circuits, etc., all of which are well known in the art, so a further description thereof will be omitted in this context. A bus interface 503 serves as an interface between the bus 500 and the transceiver 502. The transceiver 502 can be an element, or a number of elements, e.g., a number of transmitters and receivers, which are units for communication with various other devices over a transmission medium. Data processed by the processor 501 are transmitted over a wireless medium through an antenna 505, and furthermore data are received by and conveyed through the antenna 505 to the processor 501.

The processor 501 is responsible for managing the bus 500 and performing normal processes, and can further provide various functions including timing, a peripheral interface, voltage regulation, power supply management, and other control functions. The memory 504 can store data for use by the processor 501 in performing the operations.

Optionally the processor 501 can be a Central Processing Unit (CPU), an Application Specific Integrated Circuit (ASIC), a Field-Programmable Gate Array (FPGA), or a Complex Programmable Logic Device (CPLD).

Based upon the same inventive idea, an embodiment of the application further provides a network-side device, and since the network-side device addresses the problem under a similar principle to the method for receiving feedback according to an embodiment of the application as illustrated in Fig. 2, reference can be made to the implementation of the method for an implementation of the network-side device, and a repeated description thereof will be omitted here.

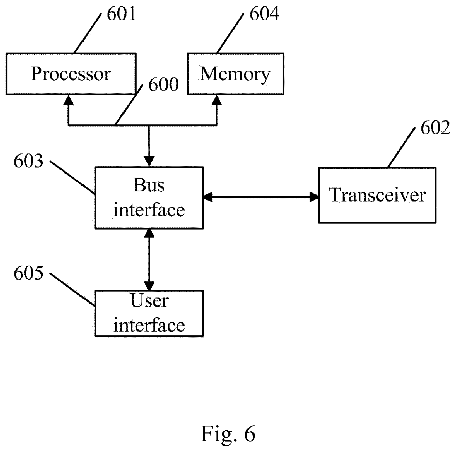

As illustrated in Fig. 6, a second network-side device for receiving feedback according to an embodiment of the application includes: a processor 601 configured to read and execute programs in a memory 604 to transmit a PDCCH order to a UE through a transceiver 602, and after an MAC control element or a BSR MAC control element from the UE is received through the transceiver 602, if it is determined that the UE transmits feedback information, that the PDCCH order has been received successfully, via the MAC control element, or the BSR MAC control element, in an MAC PDU, to determine that the UE has received successfully the PDCCU order; and the transceiver 602 is configured to be controlled by the processor 601 to receive and transmit data.

Optionally the processor 601 is configured: to determine that the UE transmits the feedback information, that the PDCCH order has been received successfully, to the network-side device via a new MAC control element; where the new MAC control element is different from an MAC control element specified in the 3GPP TS 36.321 protocol.

Optionally the processor 601 is configured: to determine the MAC control element corresponding to a new first MAC sub-header logical channel identifier value in the MAC PDU as the new MAC control element.

Optionally the processor 601 is configured: to determine that the UE transmits the feedback information, that the PDCCH order has been received successfully, to the network-side device via a new BSR MAC control element; where the new BSR MAC control element is different from a BSR MAC control element specified in the 3GPP TS 36.321 protocol.

Optionally the processor 601 is configured: to determine the BSR MAC control element corresponding to a new second MAC sub-header logical channel identifier value in the MAC PDU as the new BSR MAC control element.

In Fig. 6, in a bus architecture (represented by a bus 600), the bus 600 can include any number of interconnecting buses and bridges to particularly link together various circuits including one or more processors represented by the processor 601, and one or more memories represented by the memory 604. The bus 600 can further link together various other circuits, e.g., peripheral devices, manostats, power management circuits, etc., all of which are well known in the art, so a further description thereof will be omitted in this context. A bus interface 603 serves as an interface between the bus 600 and the transceiver 602. The transceiver 602 can be an element, or a number of elements, e.g., a number of transmitters and receivers, which are units for communication with various other devices over a transmission medium. For example, the transceiver 602 receives external data from another device. The transceiver 602 is configured to transmit data processed by the processor 601 to the other device. A user interface 605, e.g., a keypad, a display, a loudspeaker, a microphone, a joystick, etc., can be further provided dependent upon the nature of a computing system.

The processor 601 is responsible for managing the bus 600 and performing normal processes, e.g., running a general operating system as described above. The memory 604 can store data for use by the processor 601 in performing the operations.

Optionally the processor 601 can be a CPU, an ASIC, an FPGA, or a CPLD.

As can be apparent from the disclosure above, in the embodiments of the application, the UE transmits the feedback information, that the PDCCH order has been received successfully, to the network-side device via an MAC control element, or a BSR MAC control element, in an MAC PDU upon reception of the PDCCH order from the network-side device to thereby notify the network-side device that the PDCCH order has been received successfully, so that the eNodeB can determine whether the UE has received successfully the PDCCH order, after the eNodeB transmits it, thus further improving the performance of the system.

Evidently those skilled in the art can make various modifications and variations to the application without departing from the spirit and scope of the application. Thus the application is also intended to encompass these modifications and variations thereto so long as the modifications and variations come into the scope of the claims appended to the application and their equivalents.

## Claims

1. A method for transmitting feedback, the method comprising:
receiving, by a User Equipment, UE, a Physical Downlink Control Channel, PDCCH, order from a network-side device; and
transmitting, by the UE, feedback information, that the PDCCH order has been received successfully, to the network-side device via a Media Access Control, MAC, control element, or a Buffer Status Report, BSR, MAC control element, in an MAC Protocol Data Unit, PDU.

2. The method according to claim 1, wherein transmitting, by the UE, the feedback information, that the PDCCH order has been received successfully, to the network-side device via the MAC control element, or the BSR MAC control element, in the MAC PDU comprises:
transmitting, by the UE, the feedback information, that the PDCCH order has been received successfully, to the network-side device via the MAC control element, or the BSR MAC control element, in the MAC PDU upon recent uplink transmission or on a recent SPS occasion, upon reception of the PDCCH order from the network-side device.

3. The method according to claim 1, wherein transmitting, by the UE, the feedback information, that the PDCCH order has been received successfully, to the network-side device via the MAC control element in the MAC PDU comprises:
transmitting, by the UE, the feedback information, that the PDCCH order has been received successfully, to the network-side device via a new MAC control element;
wherein the new MAC control element is different from an MAC control element specified in a 3GPP TS 36.321 protocol.

4. The method according to claim 3, wherein a length of the new MAC control element is 0 bit or 8 bits.

5. The method according to claim 3, wherein after the UE receives the PDCCH order from the network-side device, and before the UE transmits the feedback information, that the PDCCH order has been received successfully, to the network-side device via the MAC control element in the MAC PDU, the method further comprises:
placing, by the UE, a new first MAC sub-header logical channel identifier value in the MAC PDU;
wherein the new first MAC sub-header logical channel identifier value indicates that the MAC control element is a new MAC control element.

6. The method according to claim 1, wherein transmitting, by the UE, the feedback information, that the PDCCH order has been received successfully, to the network-side device via the BSR MAC control element in the MAC PDU comprises:
transmitting, by the UE, the feedback information, that the PDCCH order has been received successfully, to the network-side device via a new BSR MAC control element;
wherein the new BSR MAC control element is different from a BSR MAC control element specified in a 3GPP TS 36.321 protocol.

7. The method according to claim 6, wherein a structure of the new BSR MAC control element comprises a part or all of:
a long BSR, a short BSR, and a truncated BSR.

8. The method according to claim 6, wherein there is no traditional BSR MAC control element in the MAC PDU of the new BSR MAC control element;
wherein the traditional BSR MAC control element is a BSR MAC control element specified in the 3GPP TS 36.321 protocol.

9. The method according to claim 6, wherein after the UE receives the PDCCH order from the network-side device, and before the UE transmits the feedback information, that the PDCCH order has been received successfully, to the network-side device via the BSR MAC control element in the MAC PDU, the method further comprises:
placing, by the UE, a new second MAC sub-header logical channel identifier value in the MAC PDU;
wherein the new second MAC sub-header logical channel identifier value indicates that the BSR MAC control element is a new BSR MAC control element.

10. A method for receiving feedback, the method comprising:
transmitting, by a network-side device, a Physical Downlink Control Channel, PDCCH, order to a User Equipment, UE; and
after the network-side device receives a Media Access Control, MAC, control element, or a Buffer Status Report, BSR, MAC control element from the UE, if it is determined that the UE transmits feedback information, that the PDCCH order has been received successfully, via the MAC control element, or the BSR MAC control element, in an MAC Protocol Data Unit, PDU, then determining, by the network-side device, that the UE has received successfully the PDCCU order.

11. The method according to claim 10, wherein determining, by the network-side device, that the UE transmits the feedback information, that the PDCCH order has been received successfully, to the network-side device via the MAC control element in the MAC PDU comprises:
determining, by the network-side device, that the UE transmits the feedback information, that the PDCCH order has been received successfully, to the network-side device via a new MAC control element;
wherein the new MAC control element is different from an MAC control element specified in a 3GPP TS 36.321 protocol.

12. The method according to claim 10, wherein determining, by the network-side device, that the UE transmits the feedback information, that the PDCCH order has been received successfully, to the network-side device via the BSR MAC control element in the MAC PDU comprises:
determining, by the network-side device, that the UE transmits the feedback information, that the PDCCH order has been received successfully, to the network-side device via a new BSR MAC control element;
wherein the new BSR MAC control element is different from a BSR MAC control element specified in a 3GPP TS 36.321 protocol.

13. A User Equipment, UE, for transmitting feedback, the UE comprising:
a first receiving module configured to receive a Physical Downlink Control Channel, PDCCH, order from a network-side device; and
a transmitting module configured to transmit feedback information, that the PDCCH order has been received successfully, to the network-side device via a Media Access Control, MAC, control element, or a Buffer Status Report, BSR, MAC control element, in an MAC Protocol Data Unit, PDU.

14. The UE according to claim 13, wherein the transmitting module is configured to:
transmit the feedback information, that the PDCCH order has been received successfully, to the network-side device via the MAC control element, or the BSR MAC control element, in the MAC PDU upon recent uplink transmission or on a recent SPS occasion, upon reception of the PDCCH order from the network-side device.

15. The UE according to claim 13, wherein the transmitting module is configured to:
transmit the feedback information, that the PDCCH order has been received successfully, to the network-side device via a new MAC control element;
wherein the new MAC control element is different from an MAC control element specified in a 3GPP TS 36.321 protocol.

16. The UE according to claim 15, wherein a length of the new MAC control element is 0 bit or 8 bits.

17. The UE according to claim 15, wherein the transmitting module is further configured to:
place a new first MAC sub-header logical channel identifier value in the MAC PDU;
wherein the new first MAC sub-header logical channel identifier value indicates that the MAC control element is a new MAC control element.

18. The UE according to claim 13, wherein the transmitting module is configured to:
transmit the feedback information, that the PDCCH order has been received successfully, to the network-side device via a new BSR MAC control element;
wherein the new BSR MAC control element is different from a BSR MAC control element specified in a 3GPP TS 36.321 protocol.

19. The UE according to claim 18, wherein a structure of the new BSR MAC control element comprises a part or all of:
a long BSR, a short BSR, and a truncated BSR.

20. The UE according to claim 18, wherein there is no traditional BSR MAC control element in the MAC PDU of the new BSR MAC control element;
wherein the traditional BSR MAC control element is a BSR MAC control element specified in the 3GPP TS 36.321 protocol.

21. The UE according to claim 18, wherein the transmitting module is further configured to:
place a new second MAC sub-header logical channel identifier value in the MAC PDU;
wherein the new second MAC sub-header logical channel identifier value indicates that the BSR MAC control element is a new BSR MAC control element.

22. A network-side device for receiving feedback, the network-side device comprising:
a second transmitting module configured to transmit a Physical Downlink Control Channel, PDCCH, order to a User Equipment, UE; and
a processing module configured, after a Media Access Control, MAC, control element, or a Buffer Status Report, BSR, MAC control element from the UE is received, if it is determined that the UE transmits feedback information, that the PDCCH order has been received successfully, via the MAC control element, or the BSR MAC control element, in an MAC Protocol Data Unit, PDU, to determine that the UE has received successfully the PDCCU order.

23. The network-side device according to claim 22, wherein the processing module is configured to:
determine that the UE transmits the feedback information, that the PDCCH order has been received successfully, to the network-side device via a new MAC control element;
wherein the new MAC control element is different from an MAC control element specified in a 3GPP TS 36.321 protocol.

24. The network-side device according to claim 22, wherein the processing module is configured to:
determine that the UE transmits the feedback information, that the PDCCH order has been received successfully, to the network-side device via a new BSR MAC control element;
wherein the new BSR MAC control element is different from a BSR MAC control element specified in a 3GPP TS 36.321 protocol.
